# EUROPÄISCHE PATENTSCHRIFT

(11) **EP 3 750 221 B1**
(45) Veröffentlichungstag und Bekanntmachung des Hinweises auf die Patenterteilung: **26.04.2023**
(21) Anmeldenummer: 19740370.2
(22) Anmeldetag: 15.07.2019
(51) Int. Cl.: H02H 7/085, H02H 7/08

(54) **SCHALTUNGSANORDNUNG UND VERFAHREN ZUM ÜBERLASTSCHUTZ EINES EC-MOTORS**
CIRCUIT ASSEMBLY AND METHOD FOR PROTECTING AN EC MOTOR FROM OVERLOADS
ENSEMBLE CIRCUIT ET PROCÉDÉ DE PROTECTION CONTRE LES SURCHARGES D'UN MOTEUR À COMMUTATION ÉLECTRONIQUE (EC)

(30) Priorität: 27.07.2018 DE 102018118180
(43) Veröffentlichungstag der Anmeldung: 16.12.2020
(73) Patentinhaber: ebm-papst Mulfingen GmbH & Co. KG, 74673 Mulfingen (DE)
(72) Erfinder: RUPP, Thomas, 97959 Assamstadt (DE); RÖSSLER, Jens, 74673 Mulfingen (DE); WEIK, Thomas, 73463 Westhausen (DE)
(74) Vertreter: Staeger & Sperling Partnerschaftsgesellschaft mbB
(86) Internationale Anmeldenummer: PCT/EP2019/068994
(87) Internationale Veröffentlichungsnummer: WO 2020/020684

(56) Entgegenhaltungen:
- EP-A1- 2 731 218
- WO-A1-93/23904
- WO-A1-02/087050
- DE-A1-102006 060 208

## Beschreibung

Die Erfindung betrifft ein Verfahren zum Überlastschutz eines EC-Motors.

In elektrischen Antrieben und Motoren ist es nahezu unvermeidlich, dass im Motor Wärmeverluste auftreten, die zu einer Temperaturerhöhung führen. Für den Elektromotor gibt es demzufolge eine obere Grenztemperatur, und sobald diese überschritten wird, kann der Motor beschädigt werden oder ausfallen.

Die Motorelektronik, die typischerweise aus einem Eingangskreis, einem Zwischenkreis, der Kommutierung und der Leistungsendstufe z. B. einem DC/AC-Wandler besteht, muss gemäß den Sicherheitsvorschriften und dem Regelwerk der Europäischen Norm EN 60335-1 so ausgeführt sein, dass die Sicherheit des Gerätes gewährleistet bleibt und eine Schutzeinrichtung bei Erreichen einer zu hohen Temperatur das Gerät oder die Einrichtung abschaltet. Dabei darf die Statortemperatur des Motors eine bestimmte Temperatur nicht überschreiten.

Es kann infolge von Betriebsstörungen am Elektromotor selbst, aber zu einer unzulässig hohen Temperatur im Elektromotor kommen. Solche Fälle treten bei vorgesehenen hohen Belastungen der Maschine auf, wie bei Schwergängigkeiten oder z. B. bei Blockade der Mechanik. Auch verschmutzte Belüftungsgitter am Elektromotor können unerwünschte Temperaturerhöhungen nach sich ziehen. Überschreitet die Wicklung des Motors die zulässige Temperatur, nimmt der Elektromotor Schaden, was den Ausfall der gesamten Maschine nach sich ziehen kann und zu unsicheren Betriebszuständen führen kann, dann, wenn z.B. ein Isolierstoff versagt. Zum Schutz des Elektromotors vor Überhitzung ist deshalb die Kenntnis der Wicklungstemperatur notwendig.

Es werden derzeit Lösungen im Stand der Technik vorgesehen, welche z. B. die Messung der Wicklungstemperatur vorsehen und eine Abschaltvorrichtung aufweisen, die bei Überschreiten der Grenztemperatur auslöst. Eine andere bekannte Herangehensweise sieht vor, dass der Wicklungsstrom in Abhängigkeit der Motordrehzahl begrenzt wird. Die Temperaturerhöhung von Wicklungen bei Motoren wird durch den Motoraufbau deren Wicklungsimpedanz und den Wicklungsstrom bestimmt.

Aus der Offenlegungsschrift WO 93/23904 A1 ist z. B. ein Verfahren zur Überwachung eines Elektromotors im Hinblick auf eine thermische Überlastung bekannt. Dazu wird während der Einschaltdauer des Elektromotors dessen Verlustleistung oder eine hierzu proportionale Größe anhand gemessener Motordaten berechnet und anschließend integriert. Der Integrationswert wird mit einem vorgegebenen Schwellwert verglichen, übersteigt der Integrationswert einen Schwellwertgrenzwert, wird der Elektromotor abgeschaltet. Nach diesem bekannten Verfahren bleiben Umgebungseinflüsse, die für das Temperaturverhalten des Elektromotors mitverantwortlich sind, unberücksichtigt.

Aus der EP 2 731 218 A1 ist eine Schaltungsanordnung zum Überlastschutz bekannt bei der der Summenstrom (IDC) anhand einzeln erfasster Phasenströme mittels einer Steuereinrichtung ermittelt wird.

Bei anderen bekannten Verfahren, die versuchen ohne einen Temperaturfühler auszukommen, wird der vom Elektromotor gezogene Strom überwacht. Überschreitet der Motorstrom über einen längeren Zeitraum hinweg den zulässigen Dauerstrom, erfolgt die Abschaltung des Motors über Motorschutzschalter oder bei drehzahlregelbaren Drehstrommotoren über den Frequenzumrichter.

Weitere bekannte Verfahren zum Schutz eines Elektromotors gegen Überhitzung sehen eine Temperaturmessung mittels eines Temperatursensors vor, der vornehmlich in die Motorwicklung eingebaut wird. So werden bei bekannten Ausführungsformen von Motoren mit umpressten Statoren z. B. Thermoschalter vor dem Umpressvorgang in die Wicklung eingesetzt und die Anschlusslitzen mit einer Leiterplatte verbunden. Erreicht die auf diese Weise ermittelte Temperatur im Nahbereich der Motorwicklung einen vorgegebenen, höchstzulässigen Grenzwert, wird auch hierbei die Abschaltung des Elektromotors veranlasst. Ein derartiges Verfahren ist aus der Offenlegungsschrift DE 199 39 997 A1 bekannt.

Die aus dem Stand der Technik bekannten Vorrichtungen und Verfahren haben eine Reihe von Nachteilen, aus denen sich in der Praxis Probleme ergeben. Bei Verwendung eines Temperatursensors ist zur elektrischen Isolierung zwischen diesem und der Wicklung eine ausreichende Isolierschicht erforderlich. Diese Isolierschicht stellt zugleich eine thermische Isolierung dar, weswegen sich insbesondere bei Überlast mit hohen Strömen eine Temperaturdifferenz zwischen dem elektrisch aktiven Teil der Wicklung selbst und dem Temperatursensor ergibt. Eine verzögerte Abschaltung des Elektromotors bei bereits vorliegender Überhitzung der Motorwicklung ist die Folge. Dieser Effekt wird durch erhöhte Anforderungen an die elektrische Isolierung für den Personenschutz noch verstärkt. Über einen in die Wicklung eingebauten Temperatursensor wird überdies die Temperatur nur an einer einzigen Stelle der Wicklung erfasst.

Bei einer Stromüberwachung lediglich des Motorstroms gibt auch das weitere Problem, dass abhängig von der Motorspannung aufgrund zulässiger Referenzwerte die Motorerwärmung nicht optimal überwacht werden kann, da sich bei einer konstanten Referenz eine nicht konstante Abschalttemperatur je nach Arbeitspunkt und Ansteuergrad des Motors ergeben.

Es ist daher Aufgabe der vorliegenden Erfindung, vorbesagte Nachteile zu überwinden und eine Schaltungsanordnung sowie eine Verfahren zum drehzahlunabhängigen Schutz eines Elektromotors bereitzustellen, die kostengünstig und zuverlässig realisierbar ist.

Diese Aufgabe wird durch ein Verfahren gemäß Anspruch 1 gelöst.

Ein Grundgedanke der vorliegenden Erfindung liegt darin, neben dem Motorstrom gleichzeitig die weiteren maßgeblichen Faktoren kumulativ zum Motorstrom mittels einer entsprechend erfindungsgemäß konzipierten Schaltungsanordnung zu erfassen, um daraus eine Abschaltbedingung zu erhalten. Maßgeblich für die Statorerwärmung sind neben dem Motorstrom auch die Motorspannung (Motorphasenspannung) und die Zwischenkreisspannung.

Erfindungsgemäß ist daher ein Verfahren mit den Schritten gemäß Anspruch 1 vorgesehen mit einer Schaltungsanordnung zum Überlastschutz eines EC-Motors vorgesehen, der ausgebildet ist von einer an einem Zwischenkreis mit einer Zwischenkreisspannung U_{ZK} betriebenen Kommutierungselektronik über eine Endstufe angesteuert zu werden, wobei die Schaltungsanordnung folgendes umfasst:
a. eine Signalverarbeitungseinrichtung, die ausgebildet ist, zum Verarbeiten eines erfassten Signals "S_{END}" repräsentierend den Endstufenstrom I_{END} der Endstufe, einer jeweils aktuellen Motorphasenspannung des EC-Motors und der aktuellen Zwischenkreisspannung U_{ZK}, wobei
b. die Signalverarbeitungseinrichtung einen Komparator aufweist, der ausgebildet ist das zum Endstufenstrom I_{END} korrespondierende Signal mit einem Referenzsignal "S_{REF}" zu vergleichen;
c. eine Abschaltvorrichtung, die ausgebildet ist, abhängig von einer Abschaltbedingung, die wenigstens das Vergleichsergebnis des Komparators umfasst, die Stromversorgung zum EC-Motor zu unterbrechen.

Das erfindungsgemäße Verfahren weist hierzu die folgenden Schritte auf:
a) Erfassen des Endstufenstroms I_{END} der Endstufe, einer Motorphasenspannung des EC-Motors und der Zwischenkreisspannung U_{ZK},
b) Zuführen der im zuvor genannten Schritt a) erfassten Messgrößen an eine dazu ausgebildete Signalverarbeitungseinrichtung;
c) Bestimmen eines dynamischen Referenzsignals aus wenigstens einem der beiden Messgrößen: aktuelle Motorphasenspannung des EC-Motors und/oder aktuelle Zwischenkreisspannung U_{ZK};
d) Kontinuierliches oder diskontinuierliches Vergleichen derjenigen Signale, die korrespondierend zum jeweils aktuellen Endstufenstrom I_{END} aus Schritt a) sind, mit dem gerade aktuell bestimmten Referenzsignal mittels des Komparators und Ermitteln daraus, ob eine Abschaltbedingung wegen zu hoher Motortemperatur vorliegt und
e) Erzeugen eines Abschaltsignals für die Abschaltvorrichtung, zur Unterbrechung der Stromversorgung zum EC-Motor, wenn die Abschaltbedingung gegeben ist.

Weiter vorteilhaft ist das Verfahren ausgebildet, wenn ein Integrator verwendet wird, der erst nach Empfang einer vorbestimmten Anzahl von Abschaltanweisungen ein Abschaltsignal an die Abschaltvorrichtung weiterleitet und erst dann eine Abschaltung erfolgt.

Ebenfalls von Vorteil ist es, wenn in Schritt b) zusätzlich ein Offset in Form einer konstanten Referenzspannung als Hilfsgröße an die Signalverarbeitungseinrichtung, vorzugsweise an deren Eingangsfilter übermittelt wird.

In einer bevorzugten Ausgestaltung des erfindungsgemäßen Verfahrens ist vorgesehen, dass in Schritt c) zum Erzeugen bzw. Bestimmen eines dynamischen Referenzsignals "S_{REF}" wenigstens die folgenden Messgrößen verarbeitet und verwendet werden: aktuelle Zwischenkreisspannung U_{ZK}, Aussteuergrad des EC-Motors und ein Offsetsignal.

Die Höhe des Endstufenstroms und demnach das erfasste Signal "S_{END}" repräsentierend den Endstufenstrom ist ein wesentlicher Indikator für die thermische Überlastung des Motors. Da der Referenzwert eine Obergrenze für den jeweils aktuell maximal zulässigen Motorstrom ist, stellt der Referenzwert einen dynamischen Referenzwert dar, der sich korrespondierend zu den Größen Motorphasenspannung und Zwischenkreisspannung ändert.

In einer vorteilhaften Ausgestaltung ist vorgesehen, dass die Signalverarbeitungseinrichtung einen Signaleingang für die Messgrößen: Motorphasenspannung, Endstufenstrom I_{END}, Zwischenkreisspannung U_{ZK} und ein Offset-Wert (als Hilfsgröße) aufweist. Eingangsseitig kann die Signalverarbeitungseinrichtung einen Filter zum Aufbereiten bzw. Filtern der Daten aufweisen und insbesondere, um daraus einen Referenzwert zu bestimmen.

Weiter vorteilhaft ist es, wenn ein Tiefpassfilter wenigstens die Messgröße des Endstufenstroms vor einer Übertragung des daraus gewonnenen Signals an den Komparator filtert.

Weiter von Vorteil ist eine Ausgestaltung bei der nachgeschaltet zum Komparator ein Integrator vorgesehen ist, der ausgebildet ist, bei Erkennen einer Abschaltbedingung die Abschaltung zu verzögern, solange bis vom Komparator eine vorbestimmte Anzahl von Abschaltanweisungen innerhalb eines vorbestimmten Zeitintervalls erhalten werden. Der Integrator hat damit die Eigenschaft, dass die Abschaltung nicht sofort eintritt, wenn das Signal für den Endstufenstrom "S_{END}" den Referenzwert "S_{REF}" überschreitet, sondern erst nach einer Reihe von solchen Abschaltsignalen. Weiter hat die Erwärmung im Stator ein sich einschwingendes Verhalten und steigt nicht spontan an. Durch den Integrator werden zudem Einflüsse durch EMV reduziert.

In einer bevorzugten Ausführungsform der Erfindung ist vorgesehen, dass ein Signalausgang der Signalverarbeitungseinrichtung bereitgestellt wird, um ein Abschaltsignal über eine Signalleitung zur Endstufe zu übertragen.

Weiter von Vorteil ist es, wenn die Abschaltvorrichtung zwischen der Kommutierungselektronik und der Endstufe oder zwischen der Endstufe und dem EC-Motor angeordnet ist, so dass der Motor von seiner Energieversorgung getrennt wird, bevor eine unzulässige Überhitzung des Stators entstanden ist ohne dass es einem Temperatursensor bedarf.

In einer weiteren vorteilhaften Ausgestaltung der Erfindung ist vorgesehen, dass eine Messvorrichtung zum Erfassen des Endstufenstroms der Endstufe vorgesehen ist, die einen Signalausgang für das Meßsignal zur Übertragung an die Signalverarbeitungseinrichtung aufweist.

Ein weiterer Aspekt der vorliegenden Erfindung betrifft ein Verfahren zum Überlastschutz eines EC-Motors, insbesondere mittels einer wie zuvor beschriebenen Schaltungsanordnung. Allerdings ist es denkbar, dass der konkrete Aufbau der Schaltungsanordnung von der beschriebenen Anordnung auch bei Verwendung des erfindungsgemäßen Verfahrens abweicht.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen:
- Fig. 1: ein Blockschaltbild einer erfindungsgemäßen Vorrichtung und
- Fig. 2: ein Blockschaltbild der Signalverarbeitungseinrichtung zur Realsierung des Überlastschutzes.

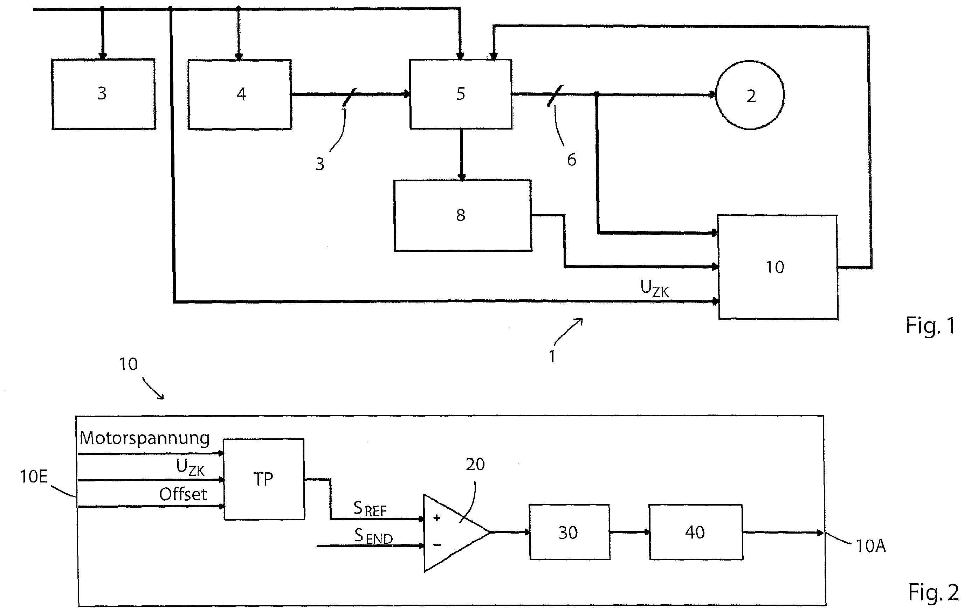

Im Folgenden wird die Erfindung mit Bezug auf die Figuren 1 und 2 näher erläutert, wobei gleiche Bezugszeichen auf gleiche strukturelle und/oder funktionale Merkmale hinweisen.

Die Figur 1 zweigt ein Blockschaltbild einer erfindungsgemäßen Vorrichtung mit einer Schaltungsanordnung 1 zum Überlastschutz eines EC-Motors 2. Der EC-Motor 2 ist an einem herkömmlichen Zwischenkreis 3 mit einer Zwischenkreisspannung U_{ZK} betriebenen Kommutierungselektronik 4 über eine Endstufe 5 verbunden, um durch die Kommutierungselektronik 4 angesteuert zu werden.

Die Schaltungsanordnung 1 umfasst zur Realisierung des Überlastschutzes die Signalverarbeitungseinrichtung 10, die ausgebildet ist, zum Verarbeiten eines erfassten Signals S_{END} repräsentierend den Endstufenstrom I_{END} der Endstufe 5, einer jeweils aktuellen Motorphasenspannung des EC-Motors 2 und ferner der aktuellen Zwischenkreisspannung U_{ZK}.

Wie in der Figur 2 zu erkennen ist, weist die Signalverarbeitungseinrichtung 10 einen Filter TP, einen Komparator 20, einen Integrator 30, ein Modul 40 zur Selbsterhaltung und einen Signalausgang 10A auf.

Der Komparator 10 ist ausgebildet das vom Filter TP zum Endstufenstrom I_{END} korrespondierende Signal S_{END} mit einem Referenzsignal S_{REF} zu vergleichen, wie dies im Blockschaltbild dargestellt ist. Der Referenzwert bzw. das dynamische Referenzsignal S_{REF} ist hierzu aus den in der Figur 2 dargestellten Eingangsgrößen aufbereitet.

In der Figur 1 sind zwei beispielhafte Abschaltvorrichtungen 3, 6 gezeigt, die jeweils ausgebildet sind, abhängig von einer Abschaltbedingung, die Stromversorgung zum EC-Motor 2 entweder vor bzw. hinter der Endstufe 5 zu unterbrechen. Der Endstufenstrom I_{END} wird mit der Meßeinrichtung 8 erfasst.

Ferner ist in der Figur 2 zu erkennen, dass der Signalverarbeitungseinrichtung 10 am Signaleingang 10E die Messgrößen: Motorphasenspannung, Endstufenstrom I_{END}, Zwischenkreisspannung U_{ZK} und ein Offset-Wert zugeführt werden.

Der Signalausgang 10A der Signalverarbeitungseinrichtung 10 kann ein Abschaltsignal über die Signalleitung 11 zur Endstufe 5 übertragen.

Die Erfindung beschränkt sich in ihrer Ausführung nicht auf die vorstehend angegebenen bevorzugten Ausführungsbeispiele. Vielmehr ist eine Abwandlung denkbar, welche z. B. eine weitere Signalaufbereitung vorsieht.

## Patentansprüche

1. Verfahren zum Überlastschutz eines EC-Motors (2) mit einer Schaltungsanordnung die ausgebildet ist, von einer an einem Zwischenkreis (3) mit einer Zwischenkreisspannung U_{ZK} betriebenen Kommutierungselektronik (4) über eine Endstufe (5) angesteuert zu werden, umfassend eine Signalverarbeitungseinrichtung (10), die ausgebildet ist, zum Verarbeiten eines erfassten Signals (S_{END}) repräsentierend den Endstufenstrom I_{END} der Endstufe (5), einer jeweils aktuellen Motorphasenspannung des EC-Motors (2) und der aktuellen Zwischenkreisspannung U_{ZK}, wobei die Signalverarbeitungseinrichtung (10) einen Komparator (20) aufweist, der ausgebildet ist das zum Endstufenstrom I_{END} korrespondierende Signal (S_{END}) mit einem Referenzsignal (S_{REF}) zu vergleichen und eine Abschaltvorrichtung (3, 6), die ausgebildet ist, abhängig von einer Abschaltbedingung, die wenigstens das Vergleichsergebnis des Komparators (10) umfasst, die Stromversorgung zum EC-Motor (2) zu unterbrechen mit den folgenden Schritten:
a. Erfassen des Endstufenstroms I_{END} der Endstufe (5), einer Motorphasenspannung des EC-Motors (2) und der Zwischenkreisspannung U_{ZK},
b. Zuführen der in Schritt a) erfassten Messgrößen an die Signalverarbeitungseinrichtung (10);
c. Erzeugen eines dynamischen Referenzsignals (S_{REF}) aus wenigstens einem der beiden Messgrößen: aktuelle Motorphasenspannung des EC-Motors (2) und/oder aktuelle Zwischenkreisspannung U_{ZK};
d. Kontinuierliches oder diskontinuierliches Vergleichen von Signalen (S_{END}) korrespondierend zum jeweils aktuellen Endstufenstrom I_{END} mit dem gerade aktuellen Referenzsignal (S_{REF}) mittels des Komparators (10) und Ermitteln daraus, ob eine Abschaltbedingung wegen zu hoher Motortemperatur vorliegt und
e. Erzeugen eines Abschaltsignals für die Abschaltvorrichtung (3, 6), zur Unterbrechung der Stromversorgung zum EC-Motor (2), wenn die Abschaltbedingung gegeben ist.

2. Verfahren nach Anspruch 1, wobei der Integrator (30) erst nach Empfang einer vorbestimmten Anzahl von Abschaltanweisungen ein Abschaltsignal an die Abschaltvorrichtung (3, 6) weiterleitet und erst dann eine Abschaltung erfolgt.

3. Verfahren nach Anspruch 1 oder 2, wobei in Schritt b) zusätzlich ein Offset in Form einer konstanten Referenzspannung als Hilfsgröße an Signalverarbeitungseinrichtung (10), vorzugsweise an deren Eingangsfilter (10F) übermittelt wird.

4. Verfahren nach Anspruch 3, wobei in Schritt c) zum Erzeugen eines dynamischen Referenzsignals (S_{REF}) wenigstens die folgenden Messgrößen verarbeitet und verwendet werden: aktuelle Zwischenkreisspannung U_{ZK}, Aussteuergrad des EC-Motors (2) und das Offsetsignal.

5. Verfahren gemäß einem der vorhergehenden Ansprüche, **dadurch gekennzeichnet, dass** die Signalverarbeitungseinrichtung (10) einen Signaleingang für die Messgrößen: Motorphasenspannung, Endstufenstrom I_{END}, Zwischenkreisspannung U_{ZK} und ein Offset-Wert aufweist.

6. Verfahren gemäß einem der vorhergehenden Ansprüche, **dadurch gekennzeichnet, dass** ein Tiefpassfilter (TP) wenigstens die Messgröße des Endstufenstroms vor einer Übertragung des daraus gewonnenen Signals an den Komparator (20) filtert.

7. Verfahren gemäß einem der vorhergehenden Ansprüche, **dadurch gekennzeichnet, dass** nachgeschaltet zum Komparator (20) ein Integrator (30) vorgesehen ist, der ausgebildet ist, bei Erkennen einer Abschaltbedingung die Abschaltung zu verzögern, solange bis vom Komparator (20) eine vorbestimmte Anzahl von Abschaltanweisungen innerhalb eines vorbestimmten Zeitintervalls erhalten werden.

8. Verfahren gemäß einem der vorhergehenden Ansprüche, **dadurch gekennzeichnet, dass** ein Signalausgang (10A) der Signalverarbeitungseinrichtung (10) vorgesehen ist, um ein Abschaltsignal über eine Signalleitung (11) zur Endstufe (5) zu übertragen.

9. Verfahren gemäß einem der vorhergehenden Ansprüche, **dadurch gekennzeichnet, dass** die Abschaltvorrichtung (3, 6) zwischen der Kommutierungselektronik (4) und der Endstufe (5) oder zwischen der Endstufe (5) und dem EC-Motor (2) angeordnet ist.

10. Verfahren gemäß einem der vorhergehenden Ansprüche, **dadurch gekennzeichnet, dass** eine Messvorrichtung (6) zum Erfassen des Endstufenstroms I_{END} der Endstufe (5) vorgesehen ist, die einen Signalausgang für das Meßsignal zur Übertragung an die Signalverarbeitungseinrichtung (10) aufweist.

## Claims

1. A method for protecting an EC motor (2) from overloads with a circuit assembly which is designed to be controlled by commutation electronics (4) operated on an intermediate circuit (3) with an intermediate circuit voltage U_{ZK} via an output stage (5), comprising a signal processing device (10), which is designed to process a detected signal (S_{END}) representing the output stage current I_{END} of the output stage (5), a current motor phase voltage of the EC motor (2) and the current intermediate circuit voltage U_{ZK}, wherein the signal processing device (10) has a comparator (20) which is designed to compare the signal (S_{END}) corresponding to the output stage current I_{END} with a reference signal (S_{REF}) and a switch-off device (3, 6) which is designed to interrupt the power supply to the EC motor (2) as a function of a switch-off condition, comprising at least the comparison result of the comparator (10), with the following steps:
a. Detecting the output stage current I_{END} of the output stage (5), a motor phase voltage of the EC motor (2) and the intermediate circuit voltage U_{ZK},
b. Supplying the measurement variables detected in step a) to the signal processing device (10);
c. Generating a dynamic reference signal (S_{REF}) from at least one of the two measured variables: current motor phase voltage of the EC motor (2) and/or current intermediate circuit voltage U_{ZK};
d. Continuously or discontinuously comparing signals (S_{END}) corresponding to the current output stage current I_{END} with the current reference signal (S_{REF}) by means of the comparator (10) and determining therefrom whether there is a switch-off condition due to excessive motor temperature and
e. Generating a switch-off signal for the switch-off device (3, 6) for interrupting the power supply to the EC motor (2) when the switch-off condition is met.

2. The method according to claim 1, wherein the integrator (30) only forwards a switch-off signal to the switch-off device (3, 6) and switch-off takes place only after receiving a predetermined number of switch-off instructions.

3. The method according to claim 1 or 2, wherein in step b) an offset in the form of a constant reference voltage is additionally transmitted as an auxiliary variable to the signal processing device (10), preferably to its input filter (10F).

4. The method according to claim 3, wherein in step c) at least the following measurement variables are processed and used to generate a dynamic reference signal (S_{REF}): current intermediate circuit voltage U_{ZK}, modulation level of the EC motor (2) and offset signal.

5. The method of any one of the preceding claims, **characterized in that** the signal processing device (10) has a signal input for the measured variables: motor phase voltage, output stage current I_{END}, intermediate circuit voltage U_{ZK} and an offset value.

6. The method according to any one of the preceding claims, **characterized in that** a low-pass filter (TP) filters at least the measured variable of the output stage current before transmission of the signal obtained therefrom to the comparator (20).

7. The method according to any one of the preceding claims, **characterized in that** downstream of the comparator (20), an integrator (30) is provided, which is designed to delay the switch-off upon detection of a switch-off condition until the comparator (20) has received a predetermined number of switch-off instructions within a predetermined time interval.

8. The method according to any one of the preceding claims, **characterized in that** a signal output (10A) of the signal processing device (10) is provided in order to transmit a switch-off signal via a signal line (11) to the output stage (5).

9. The method according to any one of the preceding claims, **characterized in that** the switch-off device (3, 6) is arranged between the commutation electronics (4) and the output stage (5) or between the output stage (5) and the EC motor (2).

10. The method according to any one of the preceding claims, **characterized in that** a measuring device (6) for detecting the output stage current I_{END} of the output stage (5) is provided, which has a signal output for the measurement signal for transmission to the signal processing device (10).

## Revendications

1. Procédé de protection contre les surcharges d'un moteur à EC (2) avec un ensemble circuit qui est conçu pour être commandé par une électronique de commutation (4) fonctionnant sur un circuit intermédiaire (3) avec une tension de circuit intermédiaire U_{ZK} par l'intermédiaire un étage de sortie (5), comprenant un dispositif de traitement de signal (10), qui est conçu pour traiter un signal détecté (S_{END}) représentatif du courant de l'étage de sortie I_{END} de l'étage de sortie (5), une tension de phase moteur actuelle respective du moteur à EC (2) et la tension de circuit intermédiaire actuelle U_{ZK}, dans lequel le dispositif de traitement de signal (10) comporte un comparateur (20) qui est conçu pour comparer le signal (S_{END}) correspondant au courant de l'étage de sortie I_{END} avec un signal de référence (S_{REF}) et un dispositif de coupure (3, 6) qui est conçu, en fonction d'une condition de coupure, pour comprendre au moins le résultat de comparaison du comparateur (10), interrompant l'alimentation électrique du moteur à EC (2) avec les étapes suivantes :
a. la détection du courant de l'étage de sortie I_{END} de l'étage de sortie (5), d'une tension de phase moteur du moteur à EC (2) et de la tension du circuit intermédiaire U_{ZK},
b. la fourniture des grandeurs mesurées détectées à l'étape a) au dispositif de traitement de signal (10) ;
c. la génération d'un signal de référence dynamique (S_{REF}) à partir d'au moins une des deux grandeurs mesurées : la tension de phase moteur actuelle du moteur à EC (2) et/ou la tension de circuit intermédiaire actuelle U_{ZK} ;
d. la comparaison continue ou discontinue des signaux (S_{END}) correspondant au courant de l'étage de sortie I_{END} respectivement actuel avec le signal de référence (S_{REF}) justement actuel au moyen du comparateur (10) et la détermination à partir de là s'il existe une condition de coupure en raison d'une température de moteur trop élevée et
e. la génération d'un signal de coupure pour le dispositif de coupure (3, 6) afin d'interrompre l'alimentation électrique du moteur à EC (2) lorsque la condition de coupure est remplie.

2. Procédé selon la revendication 1, dans lequel l'intégrateur (30) ne transmet un signal de coupure au dispositif de coupure (3, 6) qu'après avoir reçu un nombre prédéterminé d'instructions de coupure et ce n'est qu'alors qu'une coupure est effectuée.

3. Procédé selon la revendication 1 ou 2, dans lequel, à l'étape b), un décalage sous la forme d'une tension de référence constante est en outre transmis comme grandeur auxiliaire au dispositif de traitement du signal (10), de préférence à son filtre d'entrée (10F).

4. Procédé selon la revendication 3, dans lequel, à l'étape c), au moins les grandeurs mesurées suivantes sont traitées et utilisées pour générer un signal dynamique de référence (S_{REF}) : la tension actuelle du circuit intermédiaire U_{ZK}, le niveau de modulation du moteur à EC (2) et le signal de décalage.

5. Procédé selon l'une des revendications précédentes, **caractérisé en ce que** le dispositif de traitement de signal (10) comporte une entrée de signal pour les grandeurs mesurées : la tension de phase moteur, le courant de l'étage de sortie I_{END}, la tension de circuit intermédiaire U_{ZK} et un décalage de valeur.

6. Procédé selon l'une des revendications précédentes, **caractérisé en ce qu'**un filtre passe-bas (TP) filtre au moins la grandeur mesurée du courant de l'étage de sortie avant la transmission du signal qui en est issu au comparateur (20).

7. Procédé selon l'une des revendications précédentes, **caractérisé en ce qu'**il est prévu, en aval du comparateur (20), un intégrateur (30) qui est conçu pour retarder la coupure, lorsqu'une condition de coupure est détectée, jusqu'à ce qu'un nombre prédéterminé d'instructions de coupure soient reçues par le comparateur (20) dans un intervalle de temps prédéterminé.

8. Procédé selon l'une des revendications précédentes, **caractérisé en ce qu'**une sortie de signal (10A) du dispositif de traitement de signal (10) est prévue pour transmettre un signal de coupure par l'intermédiaire d'une ligne de signal (11) à l'étage de sortie (5).

9. Procédé selon l'une des revendications précédentes, **caractérisé en ce que** le dispositif de coupure (3, 6) est agencé entre l'électronique de commutation (4) et l'étage de sortie (5) ou entre l'étage de sortie (5) et le moteur à EC (2).

10. Procédé selon l'une des revendications précédentes, **caractérisé en ce qu'**un dispositif de mesure (6) pour détecter le courant d'étage de sortie I_{END} de l'étage de sortie (5) est prévu, qui a une sortie de signal pour le signal de mesure pour la transmission au dispositif de traitement de signal (10).
